# EUROPEAN PATENT APPLICATION

(11) **EP 4 717 585 A1**
(43) Date of publication of application: **01.04.2026**
(21) Application number: 24202789.4
(22) Date of filing: 26.09.2024
(51) Int. Cl.: B64C 1/06, B64C 27/04

(54) **A ROTARY-WING AIRCRAFT WITH A FUSELAGE THAT COMPRISES A LOAD CARRYING SHELL STRUCTURE AND A LOAD CARRYING STIFFENING MEMBER STRUCTURE**

(71) Applicant: AIRBUS HELICOPTERS DEUTSCHLAND GmbH, 86609 Donauwörth (DE)
(72) Inventor: FINK, Axel, 86609 DONAUWÖRTH (DE)
(74) Representative: GPI Brevets

(57) **Abstract**

The present technology relates to a rotary-wing aircraft with a fuselage that comprises a load carrying shell structure (210) and a load carrying stiffening member structure (220), wherein the load carrying shell structure (210) delimits an aircraft inner volume (123), and wherein the load carrying stiffening member structure (220) is arranged outside of the aircraft inner volume (123) on an outer surface (218) of the load carrying shell structure (210).

## Description

The present technology relates to a rotary-wing aircraft with a fuselage comprising a load carrying shell structure and a load carrying stiffening member structure.

Generally, rotary-wing aircrafts and, in particular, helicopters are characterized by a high systemic density with multiple systems, devices, equipment units, as well as harness and pipe routings integrated in a limited storage volume within an associated airframe. As such, it is typically required to provide direct and quick access to these items from the outside of the helicopter for maintenance requirements, inspection, mission adaptations and further service tasks.

On the other hand, helicopters are typically mainly built with an airframe incorporating primary fuselage shells arranged at the outer perimeter of the fuselage body, hence, defining an outer surface of the helicopter and being exposed to the exterior. The primary fuselage shells represent one of the main load carrying structural members of the airframe and are typically stiffened by back structural members such as frames, ribs, longitudinal stiffeners (stringers) and beams. Such back structural members are arranged within the inner volume delimited by the primary fuselage shells.

For instance, the document US 11,117,674 B2 describes an aircraft with a modular airframe having a basic primary structure that is built-up by a load carrying framework. Structural shells that transfer shear loads in the horizontal plane of the aircraft and contribute to torsional stiffness of the modular airframe are detachably mounted to the outside of the load carrying framework, whereas the load carrying framework comprises a plurality of longerons arranged within the structural shells. More specifically, these interior structural elements that support the exterior structural shells of the helicopter airframes are used as well to introduce local loads and smear them within the structural shells. As a result, many of the systems and equipment units are attached to the supporting members and the shell skin.

Furthermore, the document US 8,991,757 B2 describes a self-supporting cabin structural segment for an aircraft comprising a fuselage structure and a floor structure. The fuselage structure defines an interior space and separates the interior space from an environment. The cabin structural segment is designed to be self-supporting and can be fastened exclusively to the floor structure. Electric components such as lighting, high channels, cabling or supply units can be fastened directly to the cabin structural segment. However, the demand for direct access to the systems and equipment units allocated within the airframe would require the incorporation of a large number of access openings within the primary fuselage shells which would have a negative impact on the structural efficiency of these shells.

Moreover, the document US 11,220,347 B2 describes a helicopter with a modular subfloor system comprising structural members and fuel tank bladders. The modular subfloor system is pre-assembled and tested independently of the other main parts of the airframe. The modular subfloor system comprises a bottom shell of the helicopter, an upper panel that forms at least a portion of a cabin floor surface of the helicopter, longitudinal and transversal structural frames, and sealing elements. However, the modular subfloor system as well as the helicopter airframe likewise employs the traditional structural arrangements. As a result, on conventional structural arrangements, a high operational efficiency in maintainability and service can only be achieved at the expense of sacrificing structural efficiency.

Similarly, document US 2010/0187352 A1 describes a multi deck aircraft with external fuel tanks being displaced on top of the fuselage. Such external fuel tanks are attached also in the conventional structural arrangement of primary outer shells with internal frames and beams.

Furthermore, since many helicopter systems have an associated fixation outside of the airframe, the corresponding fixation brackets need to pass through the primary fuselage shells in order to interconnect the inner structural members. This, however, translates either into a local distortion of the shells by means of specific cut-outs or by heavy multi-partite fitting designs that are typically featuring an external fitting with an internal counter-fitting.

Moreover, specific cut-outs have to be implemented onto the primary fuselage shells in order to allow the access from the outside to the systems and equipment units housed within the inner fuselage perimeter, the cut-outs being closed by a corresponding hatch or trapdoor which can be opened or removed from the outside. The size of the cut-outs is often driven not by the size of the equipment unit, but by the ergonomics required for the accessibility and visibility of the operator to operate the equipment and its connectors. The cut-outs - which can be large in number and size - disturb the load bearing continuity of the primary fuselage shells, reduce their load bearing capabilities and, hence, their structural efficiency, requiring additional reinforcements around the cut-outs.

In addition, arranging the primary fuselage shells on the external perimeter of the airframe leads to a high exposure of the primary fuselage shells to accidental damages during the maintenance operations through the openings, damage due to external misuse in service, or even damage due to environmental effects such as hail or debris. Accidental visible damage on a primary structure must be evaluated and often requires costly and time-consuming repair to restore flight safety.

In summary, the above described structural arrangements of helicopter fuselages are generally facing problems of maintainability, accessibility of systems and harnesses and operational robustness.

It is, therefore, an object of the present invention to provide a rotary-wing aircraft with a new structural arrangement of an airframe which is especially advantageous for maintenance and service whilst reducing the negative impact on the structural efficiency of the airframe. This object is solved by a rotary-wing aircraft with a fuselage comprising a load carrying shell structure and a load carrying stiffening member structure having the features of claim 1.

More specifically, in the rotary-wing aircraft with the fuselage that comprises the load carrying shell structure and the load carrying stiffening member structure, the load carrying shell structure delimits an aircraft inner volume. The load carrying stiffening member structure is arranged outside of the aircraft inner volume on an outer surface of the load carrying shell structure.

Illustratively, the fuselage of the rotary-wing aircraft may incorporate primary fuselage side shells, primary fuselage upper deck shells, and primary lower deck shells. These shells are one of the main load bearing members, i. e. the load carrying shell structure of the structural arrangement of the fuselage.

Further structural elements of the main load bearing structural arrangement of the fuselage may comprise frames, beams, intercostals and ribs. These elements may, for example, form the load carrying stiffening member structure to stiffen and support the primary fuselage shells and are used to introduce local loads into the load bearing shells. Local loads may be induced by equipment and systems, such as the main gear box, engines, landing gears, seats, cargo, moorings, fuel tanks etc.

Advantageously, the load carrying stiffening member structure according to the present invention is arranged outside the aircraft inner volume delimited by the load carrying shell structure. As a result, the load carrying stiffening members such as frames and beams are pointing to the exterior, being allocated between the load carrying shell structure and the exterior. Accordingly, the load carrying shell structure does not need to incorporate numerous cut-outs for the accessibility to the system units installed within the fuselage perimeter. Therefore, the load carrying shell structure can keep physical and, hence, load bearing continuity, achieving a high structural and production efficiency without the need of local and heavy reinforcements which are typically often required around cut-outs on highly loaded shells.

Furthermore, external fixations for load introduction, such as main gear box fixations, landing gears, engines, moorings, external equipment carriers, hoists, etc., can be easily designed with brackets directly interconnected to the load carrying shell structure and the supporting members of the load carrying stiffening member structure. As a result, complex and heavy designs of differential brackets or local cut-outs on the shell structure for pass-throughs of lugs can be omitted.

Illustratively, the primary structural arrangement composed of the load carrying shell structure and the load carrying stiffening member structure may be covered from the exterior by external cover panels, i. e, outer cover panels. The outer cover panels are not part of the primary structure, which means that they are free of load carrying duties. The outer cover panels merely provide the external shape of the fuselage and are, preferably, removably attached to the load carrying stiffening member structure.

By way of example, systems, harnesses and equipment, pipes, as well as brackets for the local load introduction may be advantageously housed in the systemic volume delimited between the (inner) load carrying shell structure and the outer cover panels. As such, the flexibility for the arrangement and distribution of harnesses and further systemic units within the systemic volume is maximized. Such arrangement and distribution are also independent of the feasibly and suitability of corresponding dedicated access panels that might have been needed on the conventional primary shells.

Furthermore, the load carrying stiffening member structure may feature specific cut-outs allowing a pass-through of systemic components such as pipes and harnesses. As such, the routings and allocation of systemic components can be planned and accomplished with less constraints and with less impact on the primary structure.

Advantageously, as the integration of the systemic units is arranged within the entire volume between the load carrying shell structure and the outer cover panels which are removably attached to the load carrying stiffening member structure, once the outer cover panels have been quickly removed, a maximum accessibility is provided for the operator, being not limited to the reduced size of conventional dedicated access panels. The size of such conventional access panels is typically a compromise between the ergonomic needs for accessibility and the structural efficiency of the shells, which can be avoided by the present invention. Instead, maximum accessibility with maximum structural efficiency is achieved. The risk to damage primary structural members, especially the load carrying shell structure, during maintenance and service, is minimized due to the direct and unlimited visibility and access into the systemic volume and the systems housed therein.

More specifically, the outer cover panels may be divided in several individual panels, which can be individually removed to access to specific equipment units depending on their allocation and required frequency of access. Furthermore, the outer cover panels may incorporate further features needed for service and maintenance, such as maintenance steps, smaller hatches for frequent access, ventilations, pass-throughs for the external fixation points, NACA ducts, fuel ports, thermal or ballistic protections, acoustic means, etc.

Advantageously, as the outer cover panels may be used to integrate the further secondary features, the load carrying shell structure would not be affected by those features. Furthermore, as the primary structure, i. e., the load carrying shell structure and the load carrying stiffening member structure, are covered and protected by the non-structural outer cover panels, the primary structure is not directly impacted by environmental influences, debris, or mishandling. If the outer cover panels are accidentally damaged, a continued safe flight of the rotary-wing aircraft will not be affected, and expensive and time-consuming structural repairs and reinforcements will not be required. Therefore, the operational efficiency and robustness is - in overall terms - substantially improved.

If desired, the load carrying shell structure may be covered by respective cowlings. For instance, the primary upper deck shell may be covered by removable cowlings and the primary lower deck shell may be also be covered as well by specific cowlings or panels, or releasable units such as tank compartment units.

By way of example, the primary lower deck may incorporate a center beam composed of two longitudinal beams which may be used for the integration of systems such as the landing gear or tank compartments. Furthermore, primary lower shells may form the floor of the cabin, which may feature specific fixation points for seats, rails, secondary removable floor panels or other anchor points within the cabin.

Furthermore, the primary side shells may represent the inner walls of the cabin, if desired. Alternatively, an internal lining may be used to provide an internal segregation of the cabin and the structural primary shells, i. e. the load carrying shell structure.

According to one aspect, the load carrying shell structure may comprise lower deck shells, upper deck shells, and lateral shells which together form the outer surface of the load carrying shell structure.

Preferably, the lower deck shells comprise floor fixation points for attachment of seats, rails, removable floor panels, and/or anchor points.

According to one aspect, the load carrying stiffening member structure may comprises at least beams and frames.

Preferably, the beams and frames are rigidly attached on the outer surface of the load carrying shell structure to the lower deck shells, the upper deck shells, and/or the lateral shells.

According to one aspect, the load carrying stiffening member structure is covered by outer cover panels which are free of load carrying duties and which define an outer perimeter of the fuselage.

Preferably, the outer cover panels are removably attached to the load carrying stiffening member structure.

According to one aspect, an internal systemic volume may be formed between the outer cover panels and the load carrying shell structure, wherein the internal systemic volume accommodates at least one of fuel pipes, harnesses, or equipment units.

According to one aspect, the load carrying stiffening member structure may comprise at least one external fixation.

Preferably, at least one of the outer cover panels may comprise a pass-through cut-out, wherein the at least one external fixation may pass through the pass-through cut-out.

According to one aspect, at least one of the outer cover panels may comprise at least one of a hatch, a ventilation access point, a maintenance step cut-out, or a protection.

According to one aspect, the rotary-wing aircraft may further comprise at least one energy source storage compartment that is attached to the load carrying stiffening member structure.

Preferably, the at least one energy source storage compartment is a fuel tank.

According to one aspect, a first and a second energy source storage compartment may be provided and spaced apart from each other by a center beam of the load carrying stiffening member structure.

According to one aspect, the aircraft inner volume may be delimited by an inner lining provided inside of the load carrying shell structure.

According to one aspect, the rotary-wing aircraft is embodied as a helicopter.

Embodiments are outlined by way of example in the following description with reference to the attached drawings. In these attached drawings, identical or identically functioning components or elements are labeled with identical reference numbers and characters and are, consequently, only described once in the following description.
- Figure 1 is a side view of an illustrative rotary-wing aircraft with a fuselage having a load carrying shell structure and a load carrying stiffening member structure,
- Figure 2 is a diagram of an illustrative fuselage section of the rotary-wing aircraft of Figure 1,
- Figure 3 is an exploded view of the fuselage section of Figure 2, and
- Figure 4 is a sectional view of the fuselage section of Figure 2 and Figure 3.

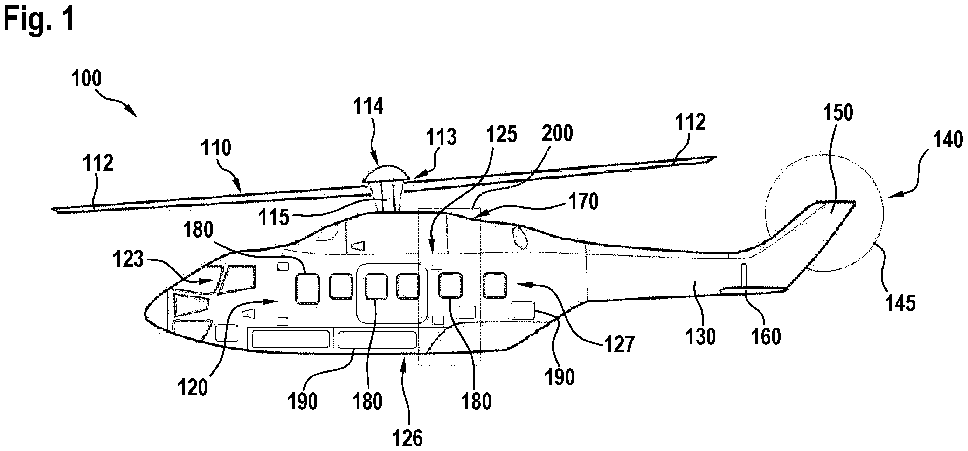

Figure 1 shows an illustrative rotary-wing aircraft 100 having at least one main rotor 110. As shown in Figure 1, the rotary-wing aircraft 100, which is sometimes also referred to as rotorcraft 100, is illustrated as a helicopter. Thus, for purposes of simplicity and clarity, the rotorcraft 100 may hereinafter be referred to as the "helicopter" 100.

Illustratively, the at least one main rotor 110 comprises a single multi-blade rotor which provides lift and forward or backward thrust during operation. The multi-blade rotor 110 comprises a plurality of rotor blades 112 that are mounted at an associated rotor head 114 with a rotor hub 113 to a rotor shaft 115, which rotates in operation of the helicopter 100 around an associated rotor axis.

The helicopter 100 has a fuselage 120 that is integrated into an airframe of the helicopter 100. The fuselage 120 is preferably connected to a suitable landing gear which is not shown in Figure 1.

Illustratively, a tail boom 130 as part of the airframe is connected to the fuselage 120. By way of example, the helicopter 100 includes at least one counter-torque device 140 configured to provide counter-torque during operation, i. e. to counter the torque created by rotation of the multi-blade rotor 110 for purposes of balancing the helicopter 100 in terms of yaw. The at least one counter-torque device 140 is illustratively provided at an aft section of the tail boom 130 and may have a tail rotor 145. If desired, the tail rotor 145 may be shrouded. The aft section of the tail boom 130 may further include a fin 150 and a horizontal stabilizer 160.

As shown in Figure 1, the fuselage 120 illustratively forms an aircraft inner volume 123 accommodating, for example, at least a cabin. More specifically, the fuselage 120 may comprise an upper fuselage region 125, a lower fuselage region 126, and lateral fuselage regions. In Figure 1, however, only a lateral portside fuselage region 127 of the lateral fuselage regions can be seen. Illustratively, the upper fuselage region 125 may be covered by an outer cover panel, which is illustrated as a cowling 170. Furthermore, the lateral portside fuselage region 127 may be provided with windows 180 and hatches 190.

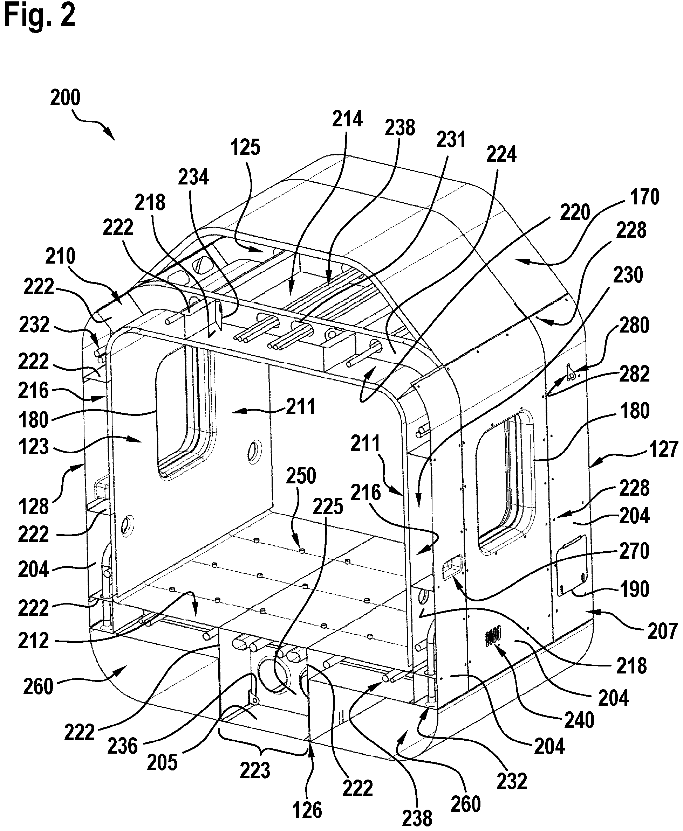

A fuselage section 200 of the helicopter 100 is shown in greater detail in Figure 2 to Figure 4, representative for the fuselage 120 as a whole.

Figure 2 shows the fuselage section 200 of the helicopter 100 of Figure 1, which forms the aircraft inner volume 123. By way of example, the windows 180 and hatches 190 of Figure 1 are provided on the lateral portside fuselage region 127 and on a lateral starboard side fuselage region 128 of the fuselage section 200.

Illustratively, the fuselage section 200 and, thus, the fuselage 120 of Figure 1, comprises a load carrying shell structure 210 and a load carrying stiffening member structure 220. The load carrying shell structure 210 delimits the aircraft inner volume 123. The load carrying stiffening member structure 220 is arranged outside of the aircraft inner volume 123 on an outer surface 218 of the load carrying shell structure 210. If desired, the aircraft inner volume 123 may be delimited by an inner lining 211 provided inside of the load carrying shell structure 210.

By way of example, the load carrying shell structure 210 comprises lower deck shells 212, upper deck shells 214, and the lateral shells 216. More specifically, the inner lining 211 may be arranged on an inner side of load carrying lateral shells 216 and upper deck shells 214 of the load carrying shell structure 210. Furthermore, the lower deck shells 212, the upper deck shells 214, and the lateral shells 216 may together form the outer surface 218 of the load carrying shell structure 210.

In some implementations, the lower deck shells 212 may comprise floor fixation points 250 for attachment of seats, rails, removable floor panels, and/or anchor points. More specifically, the lower deck shells 212 may represent a structural floor of the cabin featuring discrete floor fixation points 250 for the attachment of e.g. seat rails, non-structural floors, or cargo anchor points.

Illustratively, the load carrying stiffening member structure 220 comprises at least beams 222 and frames 224. As shown in Figure 2, the longitudinal beams 222 and frames 224 are oriented outwards, i. e. toward the exterior of the helicopter 100 of Figure 1, and are, therefore, located on an outer side of the load carrying shell structure 210. The load carrying shell structure 210, in turn, is oriented inwardly, i. e. toward the interior of the helicopter 100 of Figure 1. Furthermore, main gear box fixations 234 as exemplary high loaded local load introduction brackets may be interconnected to the upper deck shells 214, the longitudinal beam 222, and/or the frame 224.

By way of example, the beams 222 and frames 224 may be rigidly attached on the outer surface 218 of the load carrying shell structure 210 to the lower deck shells 212, the upper deck shells 214, and/or the lateral shells 216. As such, the lower deck shells 212, upper deck shells 214, and lateral shells 216 are externally supported at least by the beams 222 and frames 224.

Illustratively, the load carrying stiffening member structure 220 may be covered by outer cover panels which are free of load carrying duties. The outer cover panels may include the cowling 170, outer lateral cover panels 204, and an outer lower cover panel 205. The outer cover panels 170, 204, 205 may define an outer perimeter 207 of the fuselage section 200, i. e. the fuselage 120 of Figure 1.

By way of example, the outer cover panels 170, 204, 205 may be removably attached to the load carrying stiffening member structure 220. Preferably, the cowling 170 covers the upper deck shells 214 and the associated beams 222 and frames 224. The outer lateral cover panels 204 and the outer lower cover panel 205 respectively cover the lateral deck shells 216 and the lower deck shell 212 with their associated beams 222 and frames 224.

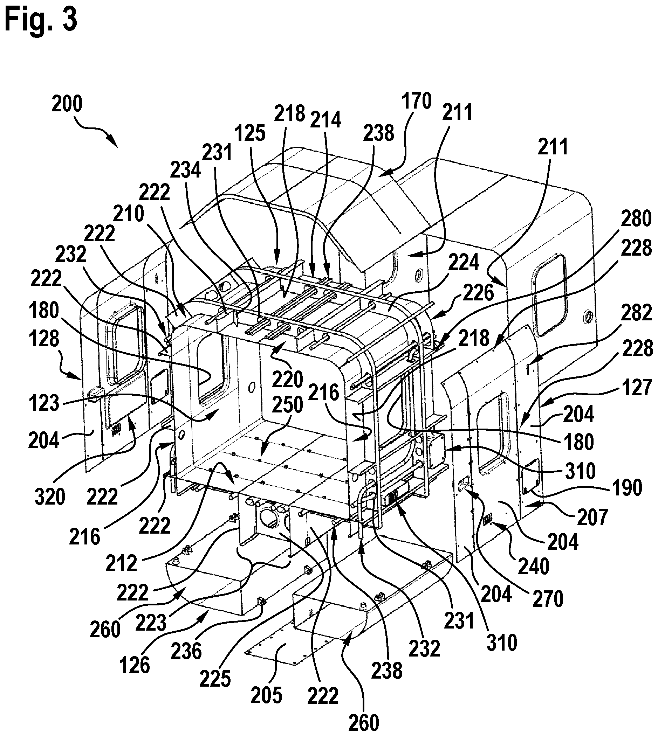

Illustratively, at the lateral portside fuselage region 127 and the lateral starboard side fuselage region 128, the outer lateral cover panels 204 are attached at least to the beams 222 and the frames 224 at releasable fixations 228. If desired, at least one of the outer cover panels, for example, the outer lateral cover panel 204, may comprise a pass-through cut-out 282. Furthermore, at least one of the outer cover panels 170, 204, 205 may comprise at least one of the hatch 190, a ventilation access point 240, a maintenance step cut-out 270, or a protection (e. g. protection 320 in Figure 3).

Preferably, the load carrying stiffening member structure 220 comprises at least one external fixation 280. If desired, the at least one external fixation 280 passes through the pass-through cut-out 282. External equipment may be attached to the at least one external fixation 280.

Illustratively, an internal systemic volume 230 is formed between the outer cover panels 170, 204, 205 and the load carrying shell structure 210. If desired, the internal systemic volume 230 may accommodate at least one of fuel pipes 232, harnesses 238, or equipment units (e. g. equipment units 310 in Figure 3).

By way of example, the fuel pipes 232 and/or harnesses 238 may be routed within lateral portions of the internal systemic volume 230 between load carrying lateral shells 216 and the outer lateral cover panels 204. If desired, cut-through openings 231 may be provided on the load carrying stiffening member structure 220 to facilitate the arrangement at least of the fuel pipes 232 and harnesses 238.

More specifically, as shown in Figure 2, the harnesses 238 may be routed through the cut-through openings 231 within an upper portion of the internal systemic volume 230 between the load carrying upper deck shell 214 and the cowling 170. Furthermore, the harnesses 238 may also be routed within a lower portion of the internal systemic volume 230 between the load carrying lower deck shell 212 and the outer lower cover panel 205 and/or between the load carrying lower deck shell 212 and lower storage compartments.

Illustratively, the load carrying lower deck shell 212 may at least partially be covered by at least one energy source storage compartment 260. More specifically, the at least one energy source storage compartment 260 may be attached to the load carrying stiffening member structure 220.

By way of example, the at least one energy source storage compartment 260 may comprise two lateral, removable fuel tanks as a first and a second energy source storage compartment 260. More specifically, the first and the second energy source storage compartment 260 are provided and spaced apart from each other by a center beam 223 of the load carrying stiffening member structure 220.

The center beam 223 is illustratively arranged below the load carrying lower deck shell 212 arranged within the midplane of the fuselage section 200. Furthermore, the carrying stiffening member structure 220 may comprise ribs 225. The center beam 223 may be supported by the ribs 225 and be provided with a removable external cover panel such as the outer lower cover panel 205.

If desired, the two lateral fuel tanks 260 may be installed aside of the center beam 223 and fixed at fuel tank fixations 236 to the supporting structure e. g. the beams 222, the frames 224, and/or the ribs 225. As such, the fuel tanks 260 may be easily dismountable and replaceable by other compartment units depending on the mission to be fulfilled.

Figure 3 shows an exploded view of the fuselage section 200 of Figure 2. The fuel tanks 260, the inner lining 211, as well as all the outer cover panels 170, 204, 205 are illustratively dismounted to show the load carrying shell structure 210 and the outwardly oriented load carrying stiffening member structure 220 comprising the beams 222, the frames 224, and the ribs 225. Illustratively, on the dismounted fuel tanks 260, several fuel tank fixations 236 are provided to attached the fuel tanks 260 to the load carrying stiffening member structure 220 outside the lower deck shells 212.

As shown in Figure 3, the load carrying stiffening member structure 220 is distributed on the outer surface 218 of the load carrying shell structure 210, covering the lower deck shells 212, the lateral shells 216, and the upper deck shells 214. Illustratively, the beams 222 and frames 224 intersect perpendicularly on the outer surface 218 of respective sections of the load carrying shell structure 210 to form a grid-like supporting structure.

By way of example, the carrying stiffening member structure 220 may further comprise intercostals 226. The intercostals 226 may be situated or extending between two adjacent beams 222. Furthermore, the external fixation 280 may be fixed to a joint of the intercostal 226 and the beam 222.

As the outer cover panels 170, 204, 205 are dismounted in Figure 3, the carrying stiffening member structure 220 comprising cut-through openings 231 for the routing of the elements arranged in the internal systemic volume 230 are visible in more detail. Such elements in the internal systemic volume 230 are easily visible and accessible once the outer cover panels 170, 204, 205 are removed. For instance, the fuel pipe 232 at the lateral portside fuselage region 127 is clearly illustrated to pass through the cut-through openings 231 on the frame 224, the beam 222, and the intercostal 226.

Apart from the fuel pipes 232 and harnesses 238, the elements arranged in the internal systemic volume 230 may further comprise equipment units 310, which are visible in the lateral portside fuselage region 127. Illustratively, the hatches 190 provided on the outer lateral cover panels 204 may allow a frequent access to the equipment units 310 allocated right behind them. Furthermore, protections 320, which are visible in the lateral starboard side fuselage region 128, may also be provided on the outer lateral cover panels 204.

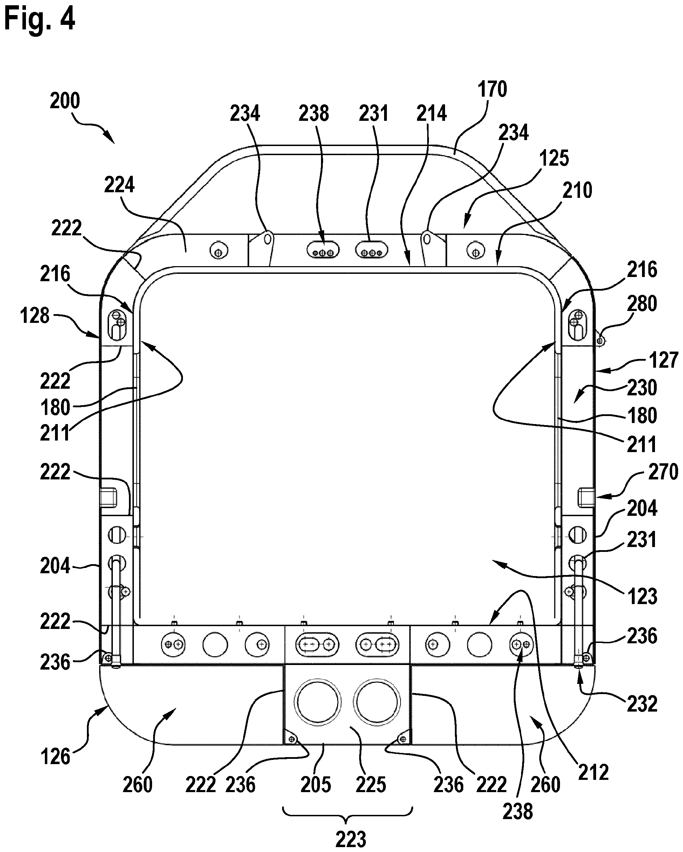

Figure 4 shows the fuselage section 200 of Figure 2 illustrating the internal systemic volume 230 between the load carrying shell structure 210 and the outer cover panels 170, 204, 205, which houses the fuel pipes 232 and harnesses 238.

As shown in Figure 4, the cut-through openings 231 are symmetrically arranged on frame 224 to allow the harnesses 238 to pass through. Furthermore, the main gearbox fittings 234 as well as the fuel tank fixations 236 are symmetrically attached to beams 222 to provide respective attachments.

It should be noted that the above described embodiments are merely described to illustrate possible implementations, but not in order to restrict the present invention thereto. Instead, multiple modifications and variations of the above described embodiments are possible and should, therefore, also be considered as being part of the invention.

For instance, according to Figure 2 to Figure 4, two lateral fuel tanks 260 are shown installed aside of the center beam 223 and attached to the respective beams 222. However, the fuel tanks 260 may alternatively be replaced by other compartment units such as cargo or equipment bays, emergency escape equipments, or flotation devices.

Furthermore, according to Figure 3, the outer cover panels 170, 204, 205 in each direction are illustratively dismounted as a complete unit. However, the outer cover panels 170, 204, 205 in each direction may comprise multiple outer cover panel units which may alternatively be independently installed on or removed from the load carrying stiffening member structure 220 via the releasable fixations 228.

Moreover, according to Figure 2 and Figure 3, the inner lining 211 extends on the load carrying upper deck shell 214 and both portside and starboard sides of the load carrying lateral shells 216. However, the inner lining 211 may alternatively also cover the load carrying lower deck shell 212.

Finally, according to Figure 2 to Figure 4, one external fixation 280 is provided in the lateral portside fuselage region 127 which passes through the pass-through cut-out 282 on the outer lateral cover panel 204 on the portside. Nevertheless, one or more external fixations 280 may alternatively be provided on both lateral portside and starboard fuselage regions 127, 128, respectively, and the associated pass-through cut-outs 282 may be correspondingly provided on outer lateral cover panels 204 on both portside and starboard side of the fuselage 120 of Figure 1.

### Reference List

- 100: rotary-wing aircraft
- 110: multi-blade rotor
- 112: rotor blade
- 113: rotor hub
- 114: rotor head
- 115: rotor shaft
- 120: fuselage
- 123: aircraft inner volume
- 125: upper fuselage region
- 126: lower fuselage region
- 127: lateral (portside) fuselage region
- 128: lateral (starboard side) fuselage region
- 130: tail boom
- 140: counter-torque device
- 145: tail rotor
- 150: fin
- 160: horizontal stabilizer
- 170: cowling
- 180: windows
- 190: hatches
- 200: fuselage section
- 204: outer lateral cover panels
- 205: outer lower cover panel
- 207: fuselage outer perimeter
- 210: load carrying shell structure
- 211: inner lining
- 212: load carrying lower deck shell
- 214: load carrying upper deck shell
- 216: load carrying lateral shells
- 218: load carrying shell structure outer surface
- 220: load carrying stiffening member structure
- 222: longitudinal beams
- 223: center beam
- 224: frames
- 225: rib
- 226: intercostal
- 228: releasable fixations
- 230: internal systemic volume
- 231: cut-through openings
- 232: fuel pipes
- 234: main gearbox fitting
- 236: fuel tank fixation
- 238: harnesses
- 240: ventilation access point
- 250: floor fixation points
- 260: energy source storage compartments
- 270: maintenance step cut-out
- 280: external fixation
- 282: pass-through cut-out
- 310: equipment units
- 320: protections

## Claims

1. A rotary-wing aircraft (100) with a fuselage (120) that comprises a load carrying shell structure (210) and a load carrying stiffening member structure (220), wherein the load carrying shell structure (210) delimits an aircraft inner volume (123), and wherein the load carrying stiffening member structure (220) is arranged outside of the aircraft inner volume (123) on an outer surface (218) of the load carrying shell structure (210).

2. The rotary-wing aircraft (100) of claim 1, wherein the load carrying shell structure (210) comprises lower deck shells (212), upper deck shells (214), and lateral shells (216) which together form the outer surface (218) of the load carrying shell structure (210).

3. The rotary-wing aircraft (100) of claim 2, wherein the lower deck shells (212) comprise floor fixation points (250) for attachment of seats, rails, removable floor panels, and/or anchor points.

4. The rotary-wing aircraft (100) of any one of the preceding claims, wherein the load carrying stiffening member structure (220) comprises at least beams (222) and frames (224).

5. The rotary-wing aircraft (100) of claim 2 or 3 with claim 4, wherein the beams (222) and frames (224) are rigidly attached on the outer surface (218) of the load carrying shell structure (210) to the lower deck shells (212), the upper deck shells (214), and/or the lateral shells (216).

6. The rotary-wing aircraft (100) of any one of the preceding claims, wherein the load carrying stiffening member structure (220) is covered by outer cover panels (170, 204, 205) which are free of load carrying duties and which define an outer perimeter (207) of the fuselage (120).

7. The rotary-wing aircraft (100) of claim 6, wherein the outer cover panels (170, 204, 205) are removably attached to the load carrying stiffening member structure (220).

8. The rotary-wing aircraft (100) of claim 6 or 7, wherein an internal systemic volume (230) is formed between the outer cover panels (170, 204, 205) and the load carrying shell structure (210), and wherein the internal systemic volume (230) accommodates at least one of fuel pipes (232), harnesses (238), or equipment units (310).

9. The rotary-wing aircraft (100) of any one of claims 6 to 8, wherein the load carrying stiffening member structure (220) comprises at least one external fixation (280), wherein at least one of the outer cover panels (170, 204, 205) comprises a pass-through cut-out (282), and wherein the at least one external fixation (280) passes through the pass-through cut-out (282).

10. The rotary-wing aircraft (100) of any one of claims 6 to 9, wherein at least one of the outer cover panels (170, 204, 205) comprises at least one of a hatch (190), a ventilation access point (240), a maintenance step cut-out (270), or a protection (320).

11. The rotary-wing aircraft (100) of any one of the preceding claims, further comprising at least one energy source storage compartment (260) that is attached to the load carrying stiffening member structure (220).

12. The rotary-wing aircraft (100) of claim 11, wherein the at least one energy source storage compartment (260) is a fuel tank.

13. The rotary-wing aircraft (100) of claim 11 or 12, wherein a first and a second energy source storage compartment (260) are provided and spaced apart from each other by a center beam (223) of the load carrying stiffening member structure (220).

14. The rotary-wing aircraft (100) of any one of the preceding claims, wherein the aircraft inner volume (123) is delimited by an inner lining (211) provided inside of the load carrying shell structure (210).

15. The rotary-wing aircraft (100) of any one of the preceding claims, which is embodied as a helicopter.
